# EUROPEAN PATENT APPLICATION

(11) **EP 1 359 087 A1**
(43) Date of publication of application: **05.11.2003**
(21) Application number: 02425275.1
(22) Date of filing: 30.04.2002
(51) Int. Cl.: B62M 9/10

(54) **Toothed wheel of a chain transmission for a bicycle**

(71) Applicant: CAMPAGNOLO S.R.L., I-36100 Vicenza (IT)
(72) Inventor: Valle, Maurizio, 36100 Vicenza (IT)
(74) Representative: Checcacci, Giorgio

(57) **Abstract**

A toothed wheel (10) of a chain transmission for a bicycle is described, intended to be coupled with a further toothed wheel (3) with a smaller diameter in a group of toothed wheels integral in rotation. The toothed wheel (10) comprises a plurality of teeth (13) which follow each other on the toothed wheel (10) separated by spaces (14) according to a direction of rotation (R) of the toothed wheel (10), in which each tooth (13) has a thickness, a width and a height and has a lead side (31), a following side (32), a front side (33) and a rear side (34). The toothed wheel (10) is characterised in that it comprises at least one among:
- a front bevel (50) on at least one tooth of first disengagement (13ps) of said plurality of teeth (13), such a front bevel (50) extending between the front side (33) and the lead side (31);
- a rear bevel (60) on at least one tooth of last engagement (13ua) of said plurality of teeth (13), such a rear bevel (60) extending between the rear side (34) and the following side (32).

Each of the two bevels (50, 60) contributes to easing the downwards gear-change, i.e. the displacement of the chain (2) from the toothed wheel (10) with a larger diameter to the toothed wheel with a smaller diameter (3).

## Description

The present invention refers to a toothed wheel of a chain transmission for a bicycle, by toothed wheel meaning either a toothed crown (also said gear) of a front gear-shift group (also said derailleur) or a sprocket of a rear gear-shift group (also simply said gear-shift). Hereafter, with the term "gear-shift" (without further specifications) either a rear gear-shift or a front gear-shift will be meant.

As it is known, every bicycle gear-shift, be it front or rear, comprises a group of several toothed wheels of different diameters, mounted integral in rotation with each other, upon which a chain engages, on one of the toothed wheels of the group alternately according to the transmission ratio to be realised. Each toothed wheel of the group comprises a plurality of teeth which follow one another on the toothed wheel at a constant distance or pitch from each other, separated by spaces; the pitch is the same on the various toothed wheels of the same group and corresponds to the pitch of the chain.

It should be noted that on a bicycle the motion transmission always takes place in the same direction, i.e. the chain always moves in the same direction (at least when it transmits power), and therefore the toothed wheels always rotate in the same direction, that is the teeth advancement direction. With reference to such a direction of rotation, each tooth has a lead side (the one facing forwards with respect to the direction of rotation) and a following side (the one facing backwards). In the toothed wheels of a front gear-shift group, the lead side of the tooth is the pressure side, that is the one which exerts the traction force on the chain; in the toothed wheels of a rear gear-shift group, the pressure side is, instead, the following side, upon which the traction force exerted by the chain acts. Each tooth also has an extension in the circumferential direction, or width, an extension in the radial direction, or height, and an extension in the axial direction, or thickness.

The displacement of the engagement of the chain from one toothed wheel to an adjacent one is known as a gear-change and it is usually obtained by displacing the chain transversally with respect to its own longitudinal axis (that is axially with respect to the toothed wheel), until it abandons the engagement with one toothed wheel and displaces to engage with the adjacent toothed wheel. Such a displacement action is usually obtained by chain-guide devices, mounted immediately upstream of the toothed wheels group with reference to the motion direction of the chain. Devices of different types exist, both for front gear-shifts and for rear gear-shifts.

If the gear-change is from a toothed wheel with a larger diameter to one with a smaller diameter, it is said "downwards gear-change"; if vice-versa it is from a toothed wheel with a smaller diameter to one with a larger diameter, it is said "upwards gear-change". It should be noted that on the front gear-shift a downwards gear-change involves a reduction in the transmission ratio, whereas on the rear gear-shift a downwards gear-change involves an increase in the transmission ratio.

The gear-change, both upwards and downwards, is in any case a delicate operation, since it takes place with the chain taut and since the chain has a very limited deformability in the transversal direction (with respect to its own longitudinal axis); the delicateness is usually greater on the front gear-shift, where the differences in diameter between adjacent toothed wheels are greater.

In particular, during a downwards gear-change, the chain must be disengaged from the larger toothed wheel and must be deviated towards the smaller toothed wheel. Whilst it is not usually difficult to make the chain reach the small toothed wheel (the tension of the chain helps this), it is, however, difficult to disengage the chain from the larger toothed wheel. Since the chain portion to be deviated is the taut one, a substantial transversal thrusting stress is needed to be able to disengage the chain from the large toothed wheel. If such a stress is insufficient, the gear-change is denied, that is it does not take place.

Also, sometimes on the front gear-shift group it may happen that during the gear-change the chain engages with the small toothed wheel without however managing to disengage from the large toothed wheel. This can happen if, by chance, the distance (in the deviated direction which the chain takes up during the gear-change) between the last engaged tooth of the large toothed wheel and the first engaged tooth of the small toothed wheel is equal to a whole multiple of the pitch. If this happens, there is not a simple denial of the gear-change, but rather the so-called "chain eddy", i.e. the chain gets tangled on the two toothed wheels and the gear-shift is clearly blocked.

The problem at the base of the present invention is that of easing the downwards gear-change.

Such a problem is solved by a toothed wheel of a chain transmission for a bicycle, intended to be coupled with a further toothed wheel with a smaller diameter in a group of toothed wheels integral in rotation, comprising a plurality of teeth which follow each other on the toothed wheel separated by spaces according to a direction of rotation of the toothed wheel, in which each tooth has a thickness, a width and a height and presents a lead side, a following side, a front side and a rear side, characterised in that it comprises at least one among:
- a front bevel on at least one tooth of first disengagement of said plurality of teeth, such a bevel extending between the front side and the lead side;
- a rear bevel on at least one tooth of last engagement of said plurality of teeth, such a bevel extending between the rear side and the following side.

By bevel is meant a surface which defines a portion of tooth which is lacking with respect to a normal ideal volume, directed obliquely with respect to both the adjacent surfaces of the tooth upon which it extends (front side and lead side for the front bevel, rear side and following side for the rear bevel) so as to constitute an ideal transition surface between the two adjacent surfaces. Such a surface can be considered to be obtained by physically cutting away part of the material, but can also be practically obtained in other ways.

The presence of the front bevel makes it easier to disengage the chain from the toothed wheel by such a tooth of first disengagement, because it reduces the interference between the chain in deviated position and the tooth. In other words, the outer side of the chain links finds in the bevel the space it needs to correctly take up the position deviated towards the other toothed wheel with a smaller diameter.

An analogous effect is obtained by the rear bevel, which allows a greater deviation of the chain right from the tooth of last engagement; therefore the interference between the chain and the front side of the tooth of first disengagement is lower.

Preferably, the front bevel and/or the rear bevel have a surface substantially parallel to the longitudinal axis of a bicycle chain which is passing from engagement with the toothed wheel with a larger diameter to engagement with the toothed wheel with a smaller diameter and which is still engaged with the toothed wheel on the tooth of last engagement but no longer on the tooth of first disengagement.

Indeed, if the presence of a bevel is however advantageous, a bevel directed just like the chain is directed during the passage from the larger toothed wheel to the smaller one gives the better result, because it only denies the tooth of the material which hinders the downwards gear-change.

Both the front and the rear bevels can extend onto just the tooth upon which they are formed, or else advantageously extend even beyond, in the circumferential and/or radial direction, in the radial direction arriving up to the base of the adjacent space or even beyond, and in the circumferential direction up to the middle point of the adjacent space or even beyond. The extension beyond the tooth is particularly advantageous for the front bevel, by which the chain can lower a lot, but it is also very advantageous for the rear bevel, since the chain links extend however in the radial direction beyond the diameter of the pins.

Both the front and the rear bevels can have different shapes. In a preferred embodiment they have a curvilinear progression, their surface being substantially cylindrical; this embodiment is preferred to maximise the construction simplicity. In another preferred embodiment, they have a linear progression with a joint, their surface having a peripheral portion (i.e. towards the periphery of the toothed wheel) which is substantially flat and a jointing inner portion (i.e. towards the centre of the toothed wheel); this embodiment is preferred for maximising the functionality of the bevel.

Both the front and the rear bevels can extend more or less on the tooth upon which they are formed, in width, in thickness and in height.

The width extension is preferably equal to at least half the width of the tooth, more preferably equal to the entire width of the tooth. The thickness extension is preferably less than 70% of the thickness of the tooth, more preferably equal to 20-40% of the thickness of the tooth. The height extension is preferably equal to at least half the height of the tooth, more preferably it gets up to the usual upper triangular bevel with which the teeth of a similar toothed wheel are provided.

A toothed wheel can be provided with one or more teeth of first disengagement, provided with a front bevel, and/or one or more teeth of last engagement, provided with a rear bevel.

For a toothed wheel of a front gear-shift, it is preferable to have a predetermined number of teeth provided with a front and/or rear bevel. In this way the downwards gear-change will take place by such teeth. Therefore, advantageously, the localisation of such teeth along the circumference of the toothed wheel shall be linked to the geometry of the coupled toothed wheel with a smaller diameter and to its angular arrangement. In particular, the localisation of the aforementioned special teeth shall be such as to avoid the geometric conditions illustrated at the beginning, in which the distance (in the deviated direction which the chain takes up during the gear-change) between the last engaged tooth of the large toothed wheel and the first engaged tooth of the small toothed wheel is equal to a whole multiple of the pitch.

Moreover, it is also preferable that all teeth of the toothed wheel be provided with a front bevel, or with a rear bevel or even more preferably with both. This allows both to ease the downwards gear-change in any angular position of the toothed wheel, and to simplify the production of the toothed wheel.

In the case in which there are more teeth with a front bevel, it is preferable that the front bevels are the same as each other, just as in the case in which there are many teeth with a rear bevel, it is preferable that the rear bevels are the same as each other.

In the case in which there are both teeth with a front bevel and teeth with a rear bevel, preferably the front bevels are the same or extends further than the rear bevels. The embodiment in which the front bevels extend further than the rear ones is the preferred one from the functional point of view, since it satisfies with greater precision the requirement of non-interference between the parts during the downwards gear-change. The embodiment in which the front bevels are the same as the rear ones is the preferred one from the production point of view, because it simplifies the construction of the toothed wheel.

Further characteristics and advantages of a toothed wheel according to the invention shall become clearer from the following description of one of its preferred embodiments, made with reference to the attached drawings. In such drawings:

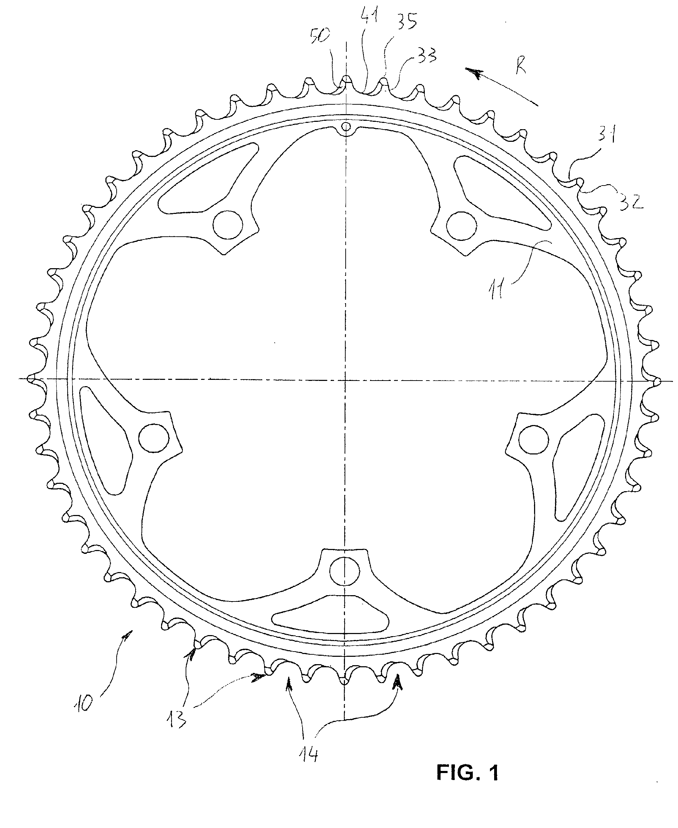

- figure 1 is a front view of a toothed wheel according to the invention;
- figure 2a is a front three-quarters perspective view of part of the toothed wheel of figure 1;
- figure 2b is a view of the same part of toothed wheel as in figure 2a, with part of a toothed wheel with a smaller diameter and part of a chain in the passage step from the toothed wheel with a greater diameter to the one with a smaller diameter;
- figure 2c is an enlarged view of a detail of figure 2b;

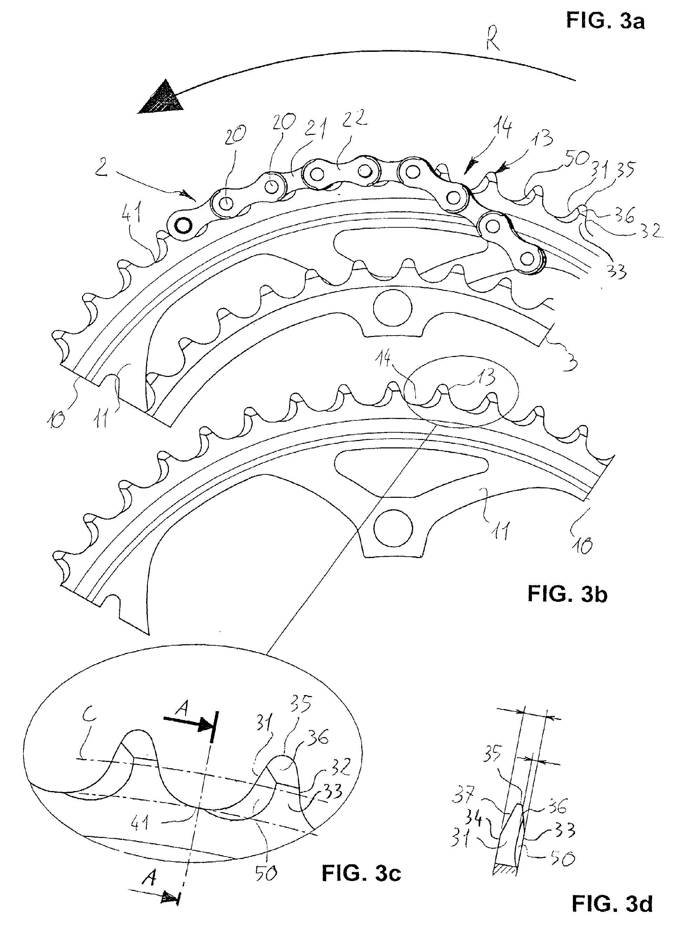

- figure 3a is a front view of the parts of toothed wheel of figure 2b;
- figure 3b is a front view of the part of toothed wheel of figure 2a;
- figure 3c is an enlarged view of a detail of figure 3b;
- figure 3d is a section view carried out along the line AA of figure 3c;

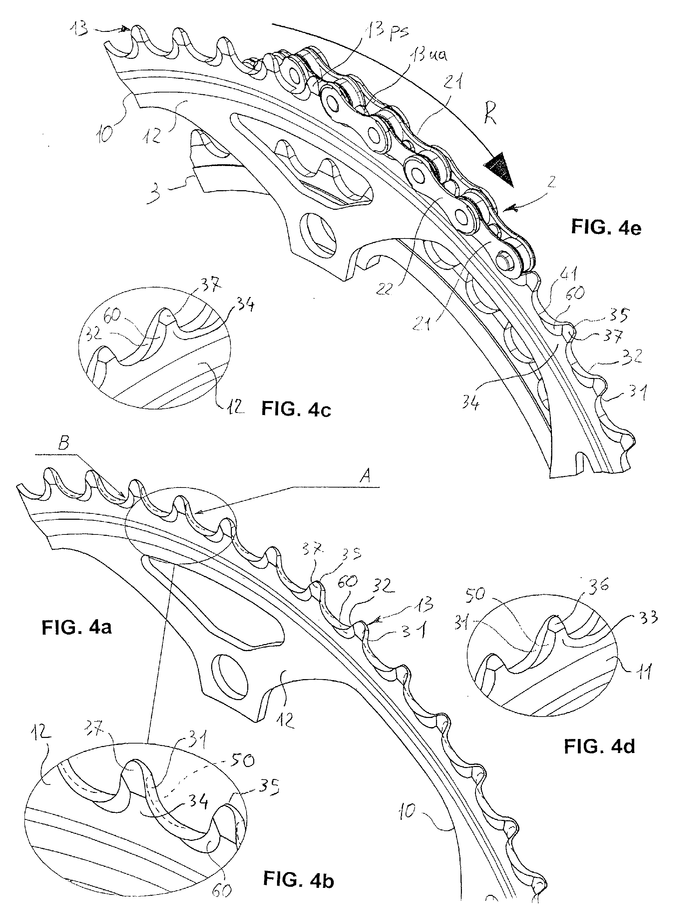

- figure 4a is a rear three-quarters perspective view of part of the toothed wheel of figure 1;
- figure 4b is an enlarged view of a detail of figure 4a;
- figure 4c is an enlarged view of a detail of figure 4a, taken from the point of view of the arrow A;
- figure 4d is an enlarged view of a detail of figure 4a, taken from the point of view of the arrow B;
- figure 4e is a view of the same part of toothed wheel as in figure 4a, with part of a toothed wheel with a smaller diameter and part of a chain in the passage step from the toothed wheel with a larger diameter to the one with a smaller diameter;
- figure 5a is a view from above of the toothed wheel of figure 1;
- figure 5b is an enlarged view of a detail of figure 5a;
- figure 5c is a view from above of the toothed wheel of figure 5a, with a toothed wheel with a smaller diameter and part of a chain in the passage step from the toothed wheel with a larger diameter to the one with a smaller diameter.

In the figures, with 10 a toothed wheel in accordance with the invention is wholly indicated; the toothed wheel 10 illustrated is a toothed crown or gear of a front gear-shift of a bicycle chain transmission, but - as stated-the invention also refers to a sprocket of a rear gear-shift.

Portions of a chain 2 intended to engage with the toothed wheel 10 are illustrated in some of the figures. The chain 2 comprises a succession of pins 20, spaced by a predetermined pitch and connected to each other in succession by links, outer links 21 and inner links 22 alternately, along a chain axis C. As it is well known, every link 21 or 22 can freely rotate with respect to the pins 20 to which it is connected, whereas it can only flex to a limited extent with respect to the axis C.

The toothed wheel 10 has a precise direction of rotation, indicated in the figures by the arrow R, in the sense that the toothed wheel 10 transmits power when it rotates in such a direction of rotation. In the opposite direction, the toothed wheel 10 can usually rotate, but does not transmit power, since the power transmission in a bicycle transmission takes place intrinsically in only one direction.

The toothed wheel 10 is intended in use to be coupled with a toothed wheel 3 with a smaller diameter within a group of toothed wheels integral with each other in rotation. The toothed wheel 3 with a smaller diameter can be a conventional toothed wheel or else a toothed wheel according to the invention, above all in the case in which there are further toothed wheels with even smaller diameters. Hereafter, for simplicity of explanation, the toothed wheel 3 shall be considered to be of the conventional type and shall not be described any further.

The toothed wheel 10 has a front face 11, intended to face towards the toothed wheel 3 with a smaller diameter, and a rear face 12 opposite to the front face 11, and it is provided with a plurality of teeth 13, arranged along the periphery of the toothed wheel 10 in succession, separated by spaces 14, with a predetermined pitch equal to the pitch of the chain 2 with which the toothed wheel 10 cooperates.

Each tooth 13 comprises a lead side 31 facing forwards with respect to the direction of rotation of the toothed wheel 10, a following side 32 facing backwards with respect to the same direction of rotation, a front side 33 on the front face 11 of the toothed wheel 10, and a rear side 34 on the rear face 12 of the toothed wheel 10. The lead and following sides 31 and 32 are curved at the top and jointed to each other so as to form a vertex 35 of the tooth 13. Near to the vertex 35, the two front and rear sides 33 and 34 are provided with respective bevels 36 and 37, converging towards the vertex 35 so as to form together a so-called triangular bevel of the tooth 13.

Each space 14 is defined by the sides 31 and 32 of the two adjacent teeth 13; such sides 31 and 32 are curved at the bottom and jointed towards each other so as to form a base 41 of the space 14.

The distance in the circumferential direction between the two lead and following sides 31 and 32 of a tooth 13 defines the width of the tooth itself. Such a width clearly decreases from the base to the vertex 35 of the tooth 13; conventionally, the width of the tooth is considered to be the distance measured by the position of the axis C of a chain engaged with the toothed wheel.

The distance in the radial direction between the base 41 of a space 14 and the vertex 35 of a tooth 13 defines the height of the tooth itself. The distance in the axial direction between the two front and rear sides 33 and 34 of a tooth 13 defines the thickness of the tooth itself.

The toothed wheel 10 comprises, according to the invention, at least one among a front bevel 50 on at least one tooth of first disengagement 13ps and a rear bevel 60 on at least one tooth of last engagement 13ua; the front bevel 50 extends between the front side 33 and the lead side 31 of the tooth 13ps, whereas the rear bevel 60 extends between the rear side 34 and the following side 32 of the tooth 13ua. With the term "tooth of first disengagement" it is meant to underline the fact that such a tooth 13ps is the first of the teeth 13 to disengage from the chain 2 during a downwards gear-change; similarly, with the term "tooth of last engagement" it is meant to underline the fact that such a tooth 13ua is the last of the teeth 13 to remain engaged with the chain 2 during a downwards gear-change. What happens during a downwards gear-change, shall be better illustrated hereafter.

In the illustrated preferred example, all of the teeth 13 are provided with both a front bevel 50 and a rear bevel 60. In other embodiments of the invention, which are preferred in particular circumstances, it can be foreseen that on the toothed wheel 10 there are:
a) a single tooth of first disengagement 13ps, provided with a front bevel 50;
b) a single tooth of last engagement 13ua, provided with a rear bevel 60;
c) a single tooth of first disengagement 13ps, provided with a front bevel 50 and a single tooth of last engagement 13ua, provided with a rear bevel 60, wherein the tooth of last engagement 13ua is the one immediately preceding the tooth of first disengagement 13ps in the direction of rotation of the toothed wheel 10;
d) a plurality of teeth of first disengagement 13ps, provided with a front bevel 50;
e) a plurality of teeth of last engagement 13ua, provided with a rear bevel 60;
f) a plurality of pairs of teeth of first disengagement 13ps and of teeth of last engagement 13ua, each pair being as defined above in point c).

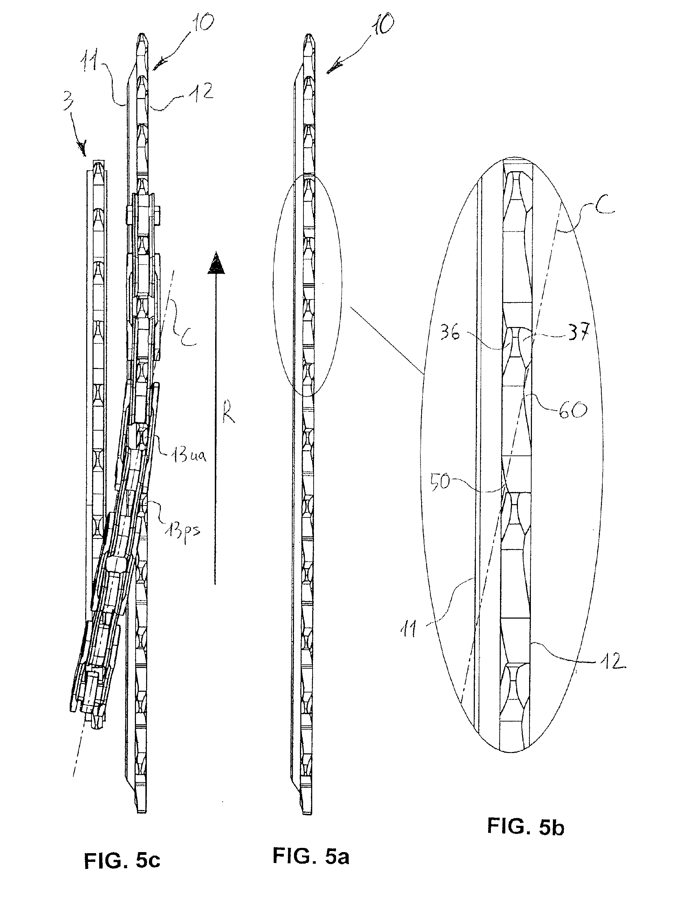

The front bevel 50 and the rear bevel 60 have a surface substantially parallel to the longitudinal axis C of the chain 2, when it is passing from engagement with the toothed wheel 10 to engagement with the toothed wheel with a smaller diameter 3 but is still engaged with the toothed wheel 10 on the tooth of last engagement 13ua but no longer on the tooth of first disengagement 13ps. Such a direction is illustrated in particular in figures 5b and 5c.

The front bevel 50 and the rear bevel 60 can extend onto just the tooth 13ps or 13ua upon which they are formed, or else they can even extend beyond; in the illustrated preferred example, the bevels 50 and 60 in the radial direction arrive beyond the base 41 of the adjacent space 14, and in the circumferential direction almost to the middle point of the adjacent space 14.

The front bevel 50 and the rear bevel 60 can have different shapes. In the preferred embodiment of the illustrated example, they have a curvilinear progression and their surface is substantially cylindrical.

The front bevel 50 and the rear bevel 60 can extend more or less onto the tooth upon which they are formed, in width, in thickness and in height. In the illustrated example, the width extension is roughly equal to half the width of the tooth 13, the thickness extension is equal to a fraction of the thickness of the tooth from 20 to 40%, the height extension reaches up to the triangular upper bevel 36, 37.

In the illustrated toothed wheel 10, the front bevels 50 and rear bevels 60 are all the same as each other. It is appropriate in any case that all front bevels 50 are the same as each other, and that all of the rear bevels 60 are the same as each other; on the other hand, it may sometimes be preferred that the front bevels 50 have a larger extension than the rear bevels 60.

In operation, the toothed wheel 10 engages with the chain 2 and rotates in the foreseen direction of rotation; the toothed wheel 3 with a smaller diameter is integral in rotation, therefore it rotates in the same direction at the same speed.

Having to carry out a downwards gear-change, i.e. having to displace the engagement of the chain 2 from the toothed wheel 10 to the toothed wheel 3, the chain 2 itself is displaced transversally by guide means *(per se* conventional, and non-illustrated) towards the toothed wheel 3. Such a displacement tends to have the chain 2 disengage from the toothed wheel 10 and to then make it engage with the toothed wheel 3. However, the disengagement - as stated previously - is not easy; the presence of a tooth 13 with one of the bevels 50 or 60 eases such a disengagement.

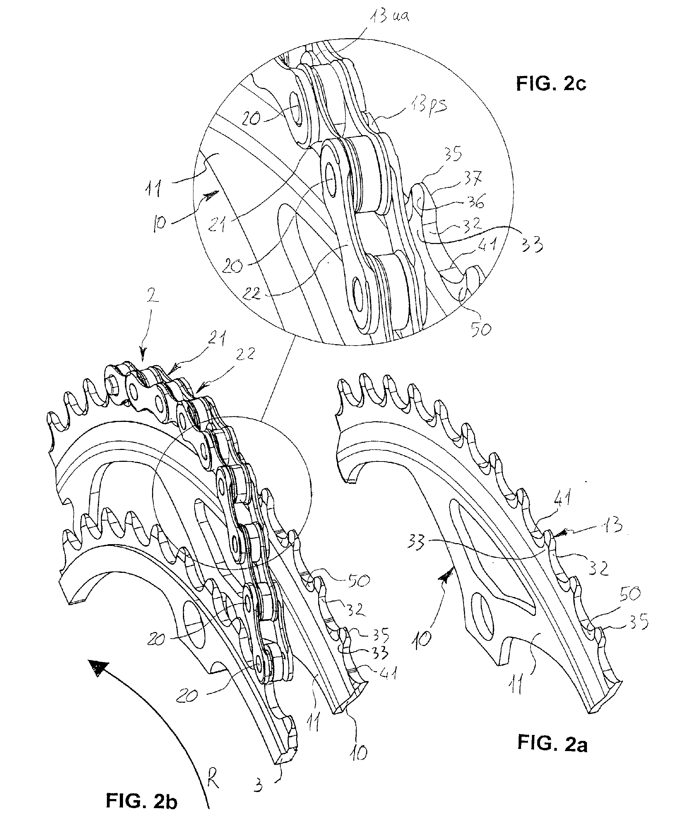

Indeed, as it can be seen above all in figures 2c and 5c, the rear bevel 60 allows the chain 2 (which is engaged with the tooth of last disengagement 13ua) to bend more before hitting the tooth 13ua with the inner face of the wide link 21. In turn, the front bevel 50 allows the adjacent narrow link 22 of the chain 2 not to interfere with the tooth of first disengagement 13ps. In other words, the presence of at least one of the bevels 50 and/or 60 creates mechanical conditions which ease the disengagement of the chain 2 from the toothed wheel 10. Such conditions can - as stated previously - be repeated on all teeth 13 of the toothed wheel 10 (as in the illustrated example) or kept in precise angular positions on the toothed wheel 10, where the downwards gear-change will take place.

## Claims

1. Toothed wheel (10) of a chain transmission for a bicycle, intended to be coupled with a further toothed wheel (3) with a smaller diameter in a group of toothed wheels integral in rotation, comprising a plurality of teeth (13) which follow each other on the toothed wheel (10) separated by spaces (14) according to a direction of rotation (R) of the toothed wheel (10), in which each tooth (13) has a thickness, a width and a height and presents a lead side (31), a following side (32), a front side (33) and a rear side (34), **characterised in that** it comprises at least one of:
- a front bevel (50) on at least one tooth of first disengagement (13ps) of said plurality of teeth (13), such a front bevel (50) extending between the front side (33) and the lead side (31);
- a rear bevel (60) on at least one tooth of last engagement (13ua) of said plurality of teeth (13), such a rear bevel (60) extending between the rear side (34) and the following side (32).

2. Toothed wheel (10) according to claim 1, wherein the front bevel (50) and/or the rear bevel (60) have a surface facing substantially parallel to the longitudinal axis (C) of a bicycle chain (2) which is passing from engagement with the toothed wheel (10) to engagement with the toothed wheel with a smaller diameter (3) and which is still engaged with the toothed wheel (10) on the tooth of last engagement (13ua) but no longer on the tooth of first disengagement (13ps).

3. Toothed wheel (10) according to any one of the previous claims, wherein the front bevel (50) and/or the rear bevel (60) extend in the radial direction at least up to the base (41) of the space (14) in front of or behind the tooth (13), respectively.

4. Toothed wheel (10) according to any one of the previous claims, wherein the front bevel (50) and/or the rear bevel (60) extend in the radial direction beyond the base (41) of the space (14) in front of or behind the tooth (13), respectively.

5. Toothed wheel (10) according to any one of the previous claims, wherein the front bevel (50) and/or the rear bevel (60) extend in the circumferential direction at least up to the middle point of the space (14) in front of or behind the tooth (13), respectively.

6. Toothed wheel (10) according to any one of the previous claims, wherein the front bevel (50) and/or the rear bevel (60) extend in the circumferential direction up to about all the space (14) in front of or behind the tooth (13), respectively.

7. Toothed wheel (10) according to any one of the previous claims, wherein the front bevel (50) and/or the rear bevel (60) have a curvilinear progression, their surface being substantially cylindrical.

8. Toothed wheel (10) according to any one of claims 1 to 6, wherein the front bevel (50) and/or the rear bevel (60) have a linear progression with a joint, their surface having a substantially flat peripheral portion and a central joint portion.

9. Toothed wheel (10) according to any one of the previous claims, wherein the front bevel (50) and/or the rear bevel (60) extend on the front side (33) and/or rear side (34), respectively, of the respective tooth (13ps, 13ua) for at least half the width of the tooth (13ps, 13ua) itself.

10. Toothed wheel (10) according to any one of the previous claims, wherein the front bevel (50) and/or the rear bevel (60) extend on the front side (33) and/or rear side (34), respectively, of the respective tooth (13ps, 13ua) for the whole width of the tooth (13ps, 13ua) itself.

11. Toothed wheel (10) according to any one of the previous claims, wherein the front bevel (50) and/or the rear bevel (60) extend on the lead side (31) and/or the following side (32), respectively, of the respective tooth (13ps, 13ua) for no more than 70% of the thickness of the tooth (13ps, 13ua) itself.

12. Toothed wheel (10) according to any one of the previous claims, wherein the front bevel (50) and/or the rear bevel (60) extend on the lead side (31) and/or the following side (32), respectively, of the respective tooth (13ps, 13ua) for 20-40% of the thickness of the tooth (13ps, 13ua) itself.

13. Toothed wheel (10) according to any one of the previous claims, wherein the front bevel (50) and/or the rear bevel (60) extend on the respective tooth (13ps, 13ua) in the radial direction for at least half the height of the tooth (13ps, 13ua) itself.

14. Toothed wheel (10) according to any one of the previous claims, wherein the front bevel (50) and/or the rear bevel (60) extend on the respective tooth (13ps, 13ua) in the radial direction up to an upper triangular bevel (36, 37) of the tooth (13ps, 13ua) itself.

15. Toothed wheel (10) according to any one of the previous claims, comprising a plurality of teeth (13) provided with a front bevel (50) and/or a plurality of teeth (13) provided with a rear bevel (60).

16. Toothed wheel (10) according to any one of the previous claims, comprising both a tooth of first disengagement (13ps) provided with the front bevel (50), and a tooth of last engagement (13ua) provided with the rear bevel (60), the tooth of last engagement (13ua) immediately preceding the tooth of first disengagement (13ps).

17. Toothed wheel (10) according to claim 16, comprising a plurality of pairs of teeth of first disengagement (13ps) and of last engagement (13ua).

18. Toothed wheel (10) according to any one of the previous claims, wherein all of the teeth (13) are provided both with a front bevel (50) and a rear bevel (60).

19. Toothed wheel (10) according to any one of the previous claims, wherein the front bevel (50) extends further than the rear bevel (60).

20. Toothed wheel (10) according to any one of the previous claims, wherein the front bevel (50) and the rear bevel (60) are equal.

21. Group of toothed wheels of a chain transmission for a bicycle, integral with each other in rotation, comprising a plurality of toothed wheels (10) according to any one of the previous claims.

22. Front gear-shift of a chain transmission for a bicycle, comprising a group of toothed wheels (10) according to claim 21.

23. Rear gear-shift of a chain transmission for a bicycle, comprising a group of toothed wheels (10) according to claim 21.
